# EUROPEAN PATENT SPECIFICATION

(11) **EP 4 485 357 B1**
(45) Date of publication and mention of the grant of the patent: **15.07.2026**
(21) Application number: 23775400.7
(22) Date of filing: 21.03.2023
(51) Int. Cl.: G06T 7/33, G06T 7/73, G06V 10/74, G06F 3/04815, G06T 15/20, G06T 19/00

(54) **IMAGE PROCESSING METHOD AND APPARATUS, ELECTRONIC DEVICE, AND STORAGE MEDIUM**
BILDVERARBEITUNGSVERFAHREN UND -VORRICHTUNG, ELEKTRONISCHE VORRICHTUNG UND SPEICHERMEDIUM
PROCÉDÉ ET APPAREIL DE TRAITEMENT D'IMAGE, DISPOSITIF ÉLECTRONIQUE ET SUPPORT D'ENREGISTREMENT

(30) Priority: 25.03.2022 CN 202210307605
(43) Date of publication of application: 01.01.2025
(73) Proprietor: Lemon Inc., Grand Cayman, KY1-1205 (KY)
(72) Inventor: CHEN, Yiling, Los Angeles, CA 90066 (US); LI, Weikai, Los Angeles, CA 90066 (US); XIE, Min, Beijing 100086 (CN); LIU, Huilin, Beijing 100086 (CN); WANG, Quan, Los Angeles, CA 90066 (US); SONG, Xiaodong, Beijing 100086 (CN); CHEN, Yi, Beijing 100086 (CN); WANG, Jiaxin, Beijing 100086 (CN); WANG, Guangwei, Beijing 100086 (CN); HUO, Aixin, Beijing 100086 (CN); ZHANG, Yongjie, Beijing 100086 (CN); LIAO, Jie, Los Angeles, CA 90066 (US)
(74) Representative: Marks & Clerk LLP
(86) International application number: PCT/SG2023/050180
(87) International publication number: WO 2023/182935

(56) References cited:
- WO-A1-2021/168338
- CN-A- 106 991 147
- CN-A- 112 070 820
- LEHIANI YASSINE ET AL: "Object identification and tracking for steady registration in mobile augmented reality", 2015 IEEE INTERNATIONAL CONFERENCE ON SIGNAL AND IMAGE PROCESSING APPLICATIONS (ICSIPA), IEEE, 19 October 2015 (2015-10-19), pages 54 - 59, XP032869415, DOI: 10.1109/ICSIPA.2015.7412163
- JONATHAN MOOSER ; SUYA YOU ; ULRICH NEUMANN: "Real-Time Object Tracking for Augmented Reality Combining Graph Cuts and Optical Flow", MIXED AND AUGMENTED REALITY, 2007. ISMAR 2007. 6TH IEEE AND ACM INTERNATIONAL SYMPOSIUM ON, 13 November 2007 (2007-11-13), Piscataway, NJ, USA , pages 1 - 8, XP058089541, ISBN: 978-1-4244-1749-0, DOI: 10.1109/ISMAR.2007.4538839

## Description

### TECHNICAL FIELD

Embodiments of the present disclosure relate to the technical field of image processing, e.g., to an image processing method and apparatus, an electronic device, and a storage medium.

### BACKGROUND

With the continuous development of the image processing technology, image processing functions integrated into related application software are enriched. For example, an application may invoke a plurality of effect models according to user requirements and show the effect models in an augmented reality (AR) scene.

However, among the solutions provided by related techniques, when a model is displayed in an AR scene, if a view angle of a photographic apparatus changes and consequently triggers an adaptive change of a picture in a display interface, the model fails to respond to this view angle changing action. That is to say, the model may be shown as remaining still in the display interface. Therefore, the model fails to maintain a consistent relative position with other objects within the AR scene, leading to a subpar visual experience for users in terms of effects presentation.

D1 (Object identification and tracking for steady registration in mobile augmented reality", 2015 IEEE INTERNATIONAL CONFERENCE ON SIGNAL AND IMAGE PROCESSING APPLICATIONS (ICSIPA), IEEE, 19 October 2015 (2015-10-19), pages 54-59, XP032869415, DOI: 10.1109/ICSIPA. 2015.7412163) discloses a method for object identification and tracking.

### SUMMARY

It is an object of the present invention to provide an image processing method and apparatus, an electronic device, and a storage medium. The object is achieved by the features of the respective independent claims. Further embodiments are defined in the corresponding dependent claims.

### BRIEF DESCRIPTION OF DRAWINGS

Fig. 1 is a flowchart of an image processing method provided by embodiment I of the present disclosure;
Fig. 2 is a structural schematic diagram of an image processing apparatus provided by embodiment II of the present disclosure; and
Fig. 3 is a structural schematic diagram of an electronic device provided by embodiment III of the present disclosure.

### DETAILED DESCRIPTION

Before delving into the technical solutions, exemplary application scenarios for the embodiments of the present disclosure are illustrated. Exemplarily, when a user captures a video by using an application, the user may add an AR effect model to the captured video based on a built-in function of the application. As an example, if the added effect model remains static when the user changes their view angle for capturing, it can create a disjointed sensation between the effects and the real-world image being captured - implying the model fails to seamlessly integrate into the AR environment. To address this, according to the technical solutions of the embodiments, when the user changes the angle for capturing, causes the displayed picture in the display interface change, the effect model will continually adjust to maintain its relative position with objects in the AR scene, thereby improving the user's viewing experience. Embodiment I

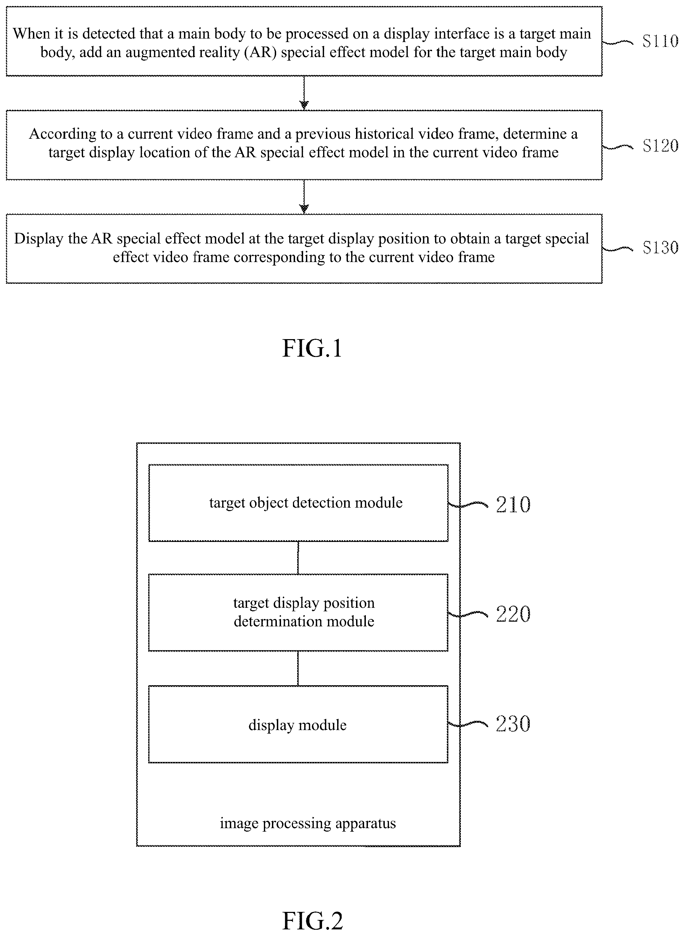

Fig. 1 is a flowchart of an image processing method provided by embodiment I of the present disclosure. This embodiment of the present disclosure is applicable to a case in which a relative position of an AR effect model to other object in an AR scene remains unchanged constantly when a picture in a display interface changes. The image processing method may be performed by an image processing apparatus that may be implemented in the form of at least one of software and hardware and optionally implemented by an electronic device. The electronic device may be a mobile terminal, a personal computer (PC), a server, or the like.

As shown in Fig. 1, the image processing method includes the following steps.

At S110, an AR effect model is added for a target object upon detecting that an object to be processed on a display interface is the target object.

The apparatus for performing the image processing method provided by the embodiment of the present disclosure may be integrated into application software supporting an effect video processing function, and the software may be installed into the electronic device. Optionally, the electronic device may be a mobile terminal, a PC, or the like. The application software may be a type of software for processing images/videos, which will not be described redundantly here one by one as long as image/video processing can be implemented. The application software may also be a specially developed application program to add and show the effects. The application software may be integrated into a corresponding page. The user may process effects videos by means of an integrated page with in the PC side.

In this embodiment, the application may store feature point data corresponding to a plurality of objects in advance. It should be understood that these objects are target objects, e.g., a sculpture or an oil painting. It needs to be noted that there may be at least one target object. The number of target objects is related to an actual requirement. Meanwhile, the feature point data corresponding to the target object is at least used for matching with the feature point data of an object in the display interface. During practical use, the application software may also be integrated with a pre-trained image recognition algorithm that is configured to identify a content in the display interface to determine whether the picture includes the target object. It will be readily understood by those skilled in the art that the image recognition algorithm may be a neural network model. Before being integrated into the application, the image recognition algorithm needs to be trained based on a corresponding training set and validation set. When a loss function of the image recognition algorithm converges, it indicates that the model is completely trained and may be deployed in the application. The model training process is not described redundantly in this embodiment.

On this basis, when the user obtains a corresponding video picture by a photographic apparatus of a terminal device, the application may detect the content in the display interface in real time. It should be understood that any object displayed in the picture may be the object to be processed. Optionally, a preset AR effect model is invoked when the display interface is detected as including the object to be processed and the object to be processed is determined as the target object based on feature point data to be matched of the object to be processed; and the AR effect model is added to the target object. This process will be described below.

Exemplarily, the application may detect the content of the picture first to determine whether the picture includes at least one object to be processed. Exemplarily, when the object to be processed is present in the picture, a pre-written feature point determination program may be invoked to determine feature point information corresponding to the object in the interface and calculate a similarity between the feature point information and pre-stored feature point information corresponding to the target object. When the similarity reaches a preset similarity threshold (e.g., 95%), it indicates that the matching of the feature point information is successful, thereby determining that the current picture includes the target object. Alternatively, the application may process a video frame at a current time using the pre-trained image recognition algorithm and determine whether the object to be processed in the picture is the target object according to an output (i.e., a recognition result of the current video frame) of the algorithm. It will be readily understood by those skilled in the art that there may also be a plurality of ways of detecting whether the object to be processed in the picture is the target object, which will not be defined in the embodiments of the present disclosure.

As a matter of course, during practical use, the feature point data of the target object or the pre-trained image recognition algorithm may be stored on a cloud server. On this basis, after the application detects the object to be processed in the display interface, the feature point information corresponding to the object to be processed or the current video frame may be uploaded to the cloud server based on a mobile terminal, and the above process of determining the target object may be then performed by the cloud server. Exemplarily, after the cloud server feeds back a processing result to the mobile terminal, the application may determine whether the current picture includes the target object. It should be understood that this way is conducive to not only improving the efficiency of detecting the target object, but also reducing the occupation of a computing resource of the mobile terminal by the application.

In this embodiment, when it is detected that the display interface includes the target object, the application may invoke the preset AR effect model and add the AR effect model to the target object, where the AR effect model may be a pre-established 2 dimensions (2D) model or a 3 dimensions (3D) model. The model may be shown in the AR scene. It should be understood that the AR technology, as a technology for realizing overlapping of a real environment and a virtual object, may allow for coexistence of the virtual AR effect model and a real object in a same picture. Exemplarily, after the completion of the establishment of the model, a specific identifier reflecting the target object may be set for the model to realize association between the model and the target object. For example, when the target object is a sculpture, the AR effect model corresponding to the target object is a virtual 3D model consistent with an actual sculpture in attributes such as a shape and a color. Meanwhile, a name of the sculpture is set as an identifier of the model so that the application invokes the model upon detecting the target object in the picture.

Exemplarily, after the AR effect model is invoked, the application adds the AR effect model to the target object. Exemplarily, the application may deploy an information display box for adding the AR effect model in advance at a specific position in the display interface. On this basis, the model may be added at a position consistent with the target object in the display interface, or added at a position in the vicinity of the target object in the display interface. It will be readily understood by those skilled in the art that the information display box that decides an actual display position of the model may be deployed at any position in the display interface in advance according to an actual requirement, which will not be defined in the embodiments of the present disclosure.

Exemplarily, the application may establish corresponding AR effect models for objects in an exhibition hall or a museum in advance and associate the models with the corresponding objects. On this basis, when the user visits the exhibition hall or the museum and captures a picture thereof by a photographic apparatus of a terminal device, the application may detect the content of the picture in real time. When it is detected that there is a sculpture as the target object in the picture, the model corresponding to the sculpture may be selected by comparing the name of the sculpture with labels of the AR effect models, and shown on the display interface, allowing the user to see the real sculpture in the exhibition hall or the museum or see the virtual sculpture model on the mobile terminal. As a matter of course, during practical use, when adding the AR effect model to the target object, the application may also show text information associated with the AR effect model on the display interface or play voice information associated with the AR effect model by the mobile terminal, thus achieving the effects of introducing and explaining the target object, which will not be described redundantly in the embodiments of the present disclosure.

At S120, a target display position of the AR effect model in a current video frame is determined based on the current video frame and a previous historical video frame.

In this embodiment, after the application adds the AR effect model to the target object in the display interface, the model can be subsequently shown on the display interface for a long time. At this time, in order to maintain the relative position of the AR effect model to the object in the AR scene unchanged constantly when the user adjusts the view angle of capturing to cause a change in the content of the picture, the display position of the AR effect model in the video frame also needs to be determined when the content of the picture changes.

Optionally, a historical key point of the previous historical video frame and a key point to be matched in the current video frame are determined to obtain at least one key point set; optical flow field information is determined based on the at least one key point set; and the target display position of the AR effect model in the current video frame is determined based on the optical flow field information.

In the video captured by the photographic apparatus of the terminal device, each video frame is associated with a corresponding timestamp. On this basis, when a video frame captured by the user after the user adjusts the view angle is taken as the current video frame, a video frame of a previous time may be determined based on the timestamp corresponding to the current video frame. It should be understood that the video frame is the previous historical video frame.

After the application determines the previous historical video frame, the historical key point is determined in the picture of the video frame. The historical key point is a point for reflecting the display position of the AR effect model. The number of historical key points is at least one. For example, in the previous historical video frame, for a 3D sculpture model shown in the display interface and corresponding to the sculpture as the target object, the historical key points may be ten coordinate values in a three-dimensional space coordinate system corresponding to the AR scene. It should be understood that the ten coordinate values accurately reflect the display position of the 3D sculpture model in the AR scene.

Correspondingly, points reflecting the display position of the AR effect model are also present in the current video frame, and these points are key points to be matched, where the number of key points to be matched is consistent with the number of historical key points in the previous historical video frame. On this basis, the key point data corresponding to two video frames are combined to obtain at least one key point set. It will be understood by those skilled in the art that when each of the two video frames has only one key point, only one key point set is obtained, and when each of the two video frames has a plurality of key points, a plurality of key point sets are obtained, which will not be described redundantly in the embodiments of the present disclosure.

In this embodiment, after at least one key point set is obtained, the application determines the corresponding optical flow field information based on such data. Optionally, a target transformation matrix is determined as the optical flow field information based on the historical key point and the corresponding key point to be matched in each key point set.

The target transformation matrix is a matrix reflecting an association relationship between the historical key point and the key point to be matched. The target transformation matrix is at least configured to allow the application to determine how to render the AR effect model in the current video frame. It should be understood that the application may determine rendering positions of a plurality of pixels corresponding to the AR effect model in the current video frame according to the target transformation matrix. Exemplarily, the target transformation matrix includes a translation matrix and a rotation matrix. From the perspective of visualization, the translation matrix is configured to show a change in position of the AR effect model in the current video frame, and the rotation matrix is configured to show a change in angle of the AR effect model in the current video frame.

In this embodiment, after at least one key point set is determined based on the previous historical video frame and the current video frame, the target transformation matrix may be obtained by calculation based on such data, and the matrix is taken as the optical flow field information, where the optical flow field refers to a two-dimensional instantaneous velocity field composed of all pixels in an image, and a two-dimensional velocity vector therein is a projection of a three-dimensional velocity vector of a visible point in the scene on an imaging surface. It should be understood that the optical flow includes not only motion information of an observed object but also rich information of a three-dimensional structure of the related object.

Exemplarily, after the corresponding historical key point of the 3D sculpture model as the AR effect model in the previous historical video frame and the corresponding key point to be matched in the current video frame are determined, the target transformation matrix may be obtained by calculation. According to the translation matrix and the rotation matrix in the target transformation matrix, the application may determine how to translate or rotate the 3D sculpture model in the current video frame and subsequently determine the target display positions of the plurality of pixels corresponding to the 3D sculpture model in the current video frame.

In the process of determining the target display position of the AR effect model in the current video frame, the target display position of the AR effect model in the current video frame may be determined based on the optical flow field information and historical position information of the AR effect model in the previous historical video frame.

The description is continued by way of the above example, when the AR effect model is the 3D sculpture model and after the optical flow information is determined based on key points corresponding to two adjacent video frames, the application may determine, in the previous historical video frame, coordinate values of the plurality of pixels of the 3D sculpture model in the three-dimensional space coordinate system corresponding to the AR scene, and use such coordinate value information as the historical position information of the AR effect model. Exemplarily, new coordinate values of the plurality of pixels of the 3D sculpture model in the current video frame are calculated according to the translation matrix and the rotation matrix in the target transformation matrix. It should be understood that the application may determine the display position of the 3D sculpture model in the current video frame based on the calculated coordinate value information of the plurality of pixels.

At S130, the AR effect model is displayed at the target display position to obtain a target effect video frame corresponding to the current video frame.

In this embodiment, after the target display position of the AR effect model in the current video frame is determined, the application may render the AR effect model in the current video frame. Optionally, the AR effect model is rendered at the target display position to maintain a relative position of the AR effect model to the target object unchanged to obtain the target effect video frame.

Exemplarily, after the new coordinate values of the pixels of the AR effect model in the current video frame are determined, the application may transfer the new coordinate values to a rendering engine to render the model in the current video frame. The rendering engine may be a program for controlling a graphics processing unit (GPU) to render a related image. It should be understood that in this embodiment, after the coordinate values of the pixels of the AR effect model are transferred to the rendering engine, a computer may complete the task of drawing an image reflected by the AR effect model onto a target display interface under the driving of the rendering engine. It will be understood by those skilled in the art that in the rendering process, the application further needs to determine information such as RGB values of the pixels to determine color information of the AR effect model, which will not be described redundantly in the embodiments of the present disclosure.

In this embodiment, when the AR effect model has been rendered in the current video frame and is shown in the display interface, from the perspective of the user, although the display position of the target object changes in the current video frame and the previous historical video frame, the display position of the AR effect model corresponding to the target object also changes adaptively. That is to say, the visual effect that the relative position of the AR effect model to the target object in the picture remains unchanged is presented.

The description is continued by way of the above example, in the previous historical video frame, the sculpture in the picture is shown above the display interface in a first orientation, and in the current video frame, the sculpture is shown below the display interface in a second orientation. Correspondingly, in the previous historical video frame, the 3D sculpture model associated with the sculpture is also shown above the display interface in a specific orientation, i.e., shown in a region in the vicinity of the sculpture as the target object, and in the current video frame, the 3D sculpture model is also shown below the display interface in the second orientation, i.e., still shown in the region in the vicinity of the sculpture as the target object, with the relative position thereof to the sculpture remaining unchanged.

In this embodiment, after the target effect video frame is obtained, a target effect video may be further determined by stitching a plurality of target effect video frames.

Exemplarily, during practical use, the user may acquire a plurality of video frames by the photographic apparatus of the terminal device. It should be understood that when the target object is present in the picture of the video frame, the application may render the AR effect model corresponding to the target object in each video frame according to the solution of this embodiment, where the generated video frame including the AR effect model picture is the effect video frame.

Exemplarily, since each video frame carries the corresponding timestamp, after the AR effect model has been rendered in a plurality of video frames to obtain corresponding effect video frames, the application may determine a sequence of a plurality of effect video frames according to the timestamps carried by the plurality of video frames and then obtain the target effect video by stitching the plurality of effect video frames according to the sequence. It should be understood that in the target effect video, the target object and the AR effect model corresponding thereto may be shown dynamically. Meanwhile, in the showing process, although the display position of the target object and the display position of the AR effect model may change, the relative position therebetween will remain still constantly.

According to the technical solutions of this embodiment of the present disclosure, the AR effect model is added for the target object upon detecting that the object to be processed on the display interface is the target object, and then the effect model is shown on the display interface. The target display position of the AR effect model in the current video frame is determined based on the current video frame and the previous historical video frame. Exemplarily, the AR effect model is displayed at the target display position to obtain the target effect video frame corresponding to the current video frame so that the effect model in the AR scene can respond to a view angle shifting action. That is, when the picture in the display interface changes, the relative position of the AR effect model to the object in the AR scene remains unchanged constantly. Thus, the picture presents the visual effect that the virtual model is completely fused into the real world, and the watching experience of the user is improved.

### Embodiment II

Fig. 2 is a structural schematic diagram of an image processing apparatus provided by embodiment II of the present disclosure. As shown in Fig. 2, the image processing apparatus includes: a target object detection module 210, a target display position determination module 220, and a display module 230.

The target object detection module 210 is configured to add an AR effect model for a target object upon detecting that an object to be processed on a display interface is the target object.

The target display position determination module 220 is configured to determine a target display position of the AR effect model in a current video frame based on the current video frame and a previous historical video frame.

The display module 230 is configured to display the AR effect model at the target display position to obtain a target effect video frame corresponding to the current video frame.

On the basis of the above technical solutions, the target object detection module 210 includes an effect model invoking unit and an effect model addition unit.

The effect model invoking unit is configured to invoke a preset AR effect model when the display interface is detected as including the object to be processed and the object to be processed is determined as the target object based on feature point data to be matched of the object to be processed.

The effect model addition unit is configured to add the AR effect model to the target object.

On the basis of the above technical solutions, the target display position determination module 220 includes a key point set determination unit, an optical flow field information determination unit, and a target display position determination unit.

The key point set determination unit is configured to determine a historical key point of the previous historical video frame and a key point to be matched in the current video frame to obtain at least one key point set.

The optical flow field information determination unit is configured to determine optical flow field information based on the at least one key point set.

The target display position determination unit is configured to determine the target display position of the AR effect model in the current video frame based on the optical flow field information.

Optionally, the optical flow field information determination unit is further configured to determine a target transformation matrix as the optical flow field information based on the historical key point and the corresponding key point to be matched in each key point set, where the target transformation matrix includes a translation matrix and a rotation matrix.

Optionally, the target display position determination unit is configured to determine the target display position of the AR effect model in the current video frame based on the optical flow field information and historical position information of the AR effect model in the previous historical video frame.

Optionally, the display module 230 is further configured to render the AR effect model at the target display position to maintain a relative position of the AR effect model to the target object unchanged to obtain the target effect video frame.

On the basis of the above technical solutions, the image processing apparatus further includes a target effect video determination module.

The target effect video determination module is configured to determine a target effect video by stitching a plurality of target effect video frames.

According to the technical solution provided by this embodiment, the AR effect model is added for the target object upon detecting that the object to be processed on the display interface is the target object, and then the effect model is shown on the display interface. The target display position of the AR effect model in the current video frame is determined based on the current video frame and the previous historical video frame. Exemplarily, the AR effect model is displayed at the target display position to obtain the target effect video frame corresponding to the current video frame so that the effect model in the AR scene can respond to a view angle shifting action. That is, when the picture in the display interface changes, the relative position of the AR effect model to the object in the AR scene remains unchanged constantly. Thus, the picture presents the visual effect that the virtual model is completely fused into the real world, and the watching experience of the user is improved.

The image processing apparatus provided in the embodiment of the present disclosure performsf the image processing method provided in any embodiment of the present disclosure and has corresponding functional modules for performing the method and corresponding effects.

### Embodiment III

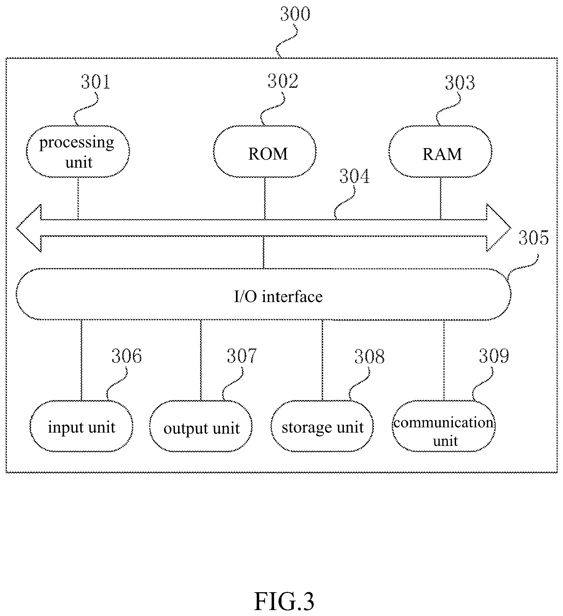

Fig. 3 is a structural schematic diagram of an electronic device provided by embodiment III of the present disclosure. With reference to Fig. 3, there is shown a structural schematic diagram of an electronic device (e.g., a terminal device or a server in Fig. 3) 300 adapted to implement the embodiments of the present disclosure. The terminal device in the embodiment of the present disclosure may include, but be not limited to, mobile terminals such as a mobile phone, a notebook computer, a digital broadcasting receiver, a personal digital assistant (PDA), a portable Android device (PAD), a portable media player (PMP), and a vehicle-mounted terminal (e.g., a vehicle-mounted navigation terminal), and fixed terminals such as a digital TV and a desktop computer. The electronic device shown in Fig. 3 is merely an example, and should not pose any limitation to the functions and the range of use of the embodiments of the present disclosure.

As shown in Fig. 3, the electronic device 300 includes a processing unit (e.g., a central processing unit, or a graphics processing unit) 301, which can perform various suitable actions and processing according to a program stored on a read-only memory (ROM) 302 or a program loaded from a storage unit 306 into a random-access memory (RAM) 303. The RAM 303 further stores various programs and data required for operations of the electronic device 300. The processing unit 301, the ROM 302, and the RAM 303 are interconnected by means of a bus 304. An input/output (I/O) interface 305 is also connected to the bus 304.

Usually, the following units may be connected to the I/O interface 305: an editing unit 306 including, for example, a touch screen, a touch pad, a keyboard, a mouse, a camera, a microphone, an accelerometer, and a gyroscope; an output unit 307 including, for example, a liquid crystal display (LCD), a loudspeaker, and a vibrator; a storage unit 308 including, for example, a magnetic tape and a hard disk; and a communication unit 309. The communication unit 309 may allow the electronic device 300 to be in wireless or wired communication with other devices to exchange data. While Fig. 3 illustrates the electronic device 300 having various units, it is to be understood that all the illustrated units are not necessarily implemented or included. More or less units may be implemented or included alternatively.

Particularly, according to the embodiments of the present disclosure, the process described above with reference to the flowchart may be implemented as a computer software program. For example, an embodiment of the present disclosure includes computer-executable Instructions, which include a computer program carried by a non-transitory computer-readable medium. The computer program includes a program code for performing the method shown in the flowchart. In such an embodiment, the computer program may be downloaded online through the communication unit 309 and installed, or installed from the storage unit 306 or installed from the ROM 302. When the computer program is executed by the processing unit 301, the functions defined in the method of the embodiments of the present disclosure are executed.

Names of messages or information exchanged between a plurality of apparatuses in embodiments of the present disclosure are only used for the purpose of description and not meant to limit the scope of these messages or information.

The electronic device provided in the present embodiment of the present disclosure and the image processing method provided in the foregoing embodiments belong to the same inventive concept. For technical details not described in detail in the present embodiment, a reference may be made to the foregoing embodiments, and the present embodiment and the foregoing embodiments have the same technical effects.

### Embodiment IV

An embodiment of the present disclosure provides a storage medium for computer-executable instructions. The storage medium stores computer-executable instructions which, when executed by a processor, cause the processor to implement the image processing method provided by the foregoing embodiment.

It needs to be noted that the storage medium for computer-executable instructions described above in the present disclosure may be a computer-readable signal medium or a computer-readable storage medium or any combination of both. The computer readable storage medium, may be, for example, but not limited to, electrical, magnetic, optical, electromagnetic, infrared, or semiconductor systems, apparatuses, or devices, or any combination thereof. Examples of the computer-readable storage medium may include, but be not limited to, an electrical connection with at least one wire, a portable computer disk, a hard disk, a random-access memory (RAM), a read-only memory (ROM), an erasable programmable read-only memory (EPROM), a flash memory, an optical fiber, a compact disk read-only memory (CD-ROM), an optical storage device, a magnetic storage device, or any appropriate combination thereof. In the present disclosure, the storage medium for computer-executable instructions may be any tangible medium that contains or stores a program, and the program may be used by or used in combination with an instruction execution system, apparatus, or device. In the present disclosure, the storage medium for computer-executable instructions may include a data signal propagated in a baseband or as a part of a carrier, and computer readable program code is carried therein. The propagated data signal may be in various forms, including but not limited to an electromagnetic signal, an optical signal, or any suitable combination thereof. The storage medium for computer-executable instructions may also be any computer readable medium except the computer readable medium. The storage medium for computer-executable instructions may send, propagate or transmit a program used by or used in combination with an instruction execution system, apparatus or device. The program code included on the storage medium for computer-executable instructions may be transmitted by using any suitable medium, including but not limited to an electric wire, a fiber-optic cable, radio frequency (RF) and the like, or any appropriate combination thereof.

In one implementation, a client and a server may communicate by means of any network protocol currently known or to be developed in future such as HyperText Transfer Protocol (HTTP), and may achieve communication and interconnection with digital data (e.g., a communication network) in any form or of any medium. Examples of the communication network include a local area network (LAN), a wide area network (WAN), an internet work (e.g., the Internet), a peer-to-peer network (e.g., ad hoc peer-to-peer network), and any network currently known or to be developed in future.

The above-mentioned storage medium for computer-executable instructions may be included in the electronic device described above, or may exist alone without being assembled with the electronic device.

The above-mentioned storage medium for computer-executable instructions may carry at least one program which, when executed by the electronic device, causes the electronic device to:
add an AR effect model for a target object upon detecting that an object to be processed on a display interface is the target object;
determine a target display position of the AR effect model in a current video frame based on the current video frame and a previous historical video frame; and
display the AR effect model at the target display position to obtain a target effect video frame corresponding to the current video frame.

A computer program code for performing the operations in the present disclosure may be written in at least one programming language or a combination thereof. The programming languages include but are not limited to object-oriented programming languages, such as Java, Smalltalk, and C++, and conventional procedural programming languages, such as C or similar programming languages. The program code may be executed fully on a user computer, executed partially on a user computer, executed as an independent software package, executed partially on a user computer and partially on a remote computer, or executed fully on a remote computer or a server. In a circumstance in which a remote computer is involved, the remote computer may be connected to a user computer via any type of network, including a local area network (LAN) or a wide area network (WAN), or may be connected to an external computer (for example, connected via the Internet by using an Internet service provider).

The flowcharts and block diagrams in the accompanying drawings illustrate system architectures, functions and operations that may be implemented by the system, method and computer program product according to the embodiments of the present disclosure. In this regard, each block in the flowcharts or block diagrams may represent a module, a program segment or a part of code, and the module, the program segment or the part of code includes one or more executable instructions for implementing specified logic functions. It should also be noted that, in some alternative implementations, the functions marked in the blocks may alternatively occur in a different order from that marked in the drawings. For example, two successively shown blocks actually may be executed in parallel substantially, or may be executed in reverse order sometimes, depending on the functions involved. It should also be noted that each block in the flowcharts and/or block diagrams and combinations of the blocks in the flowcharts and/or block diagrams may be implemented by a dedicated hardware-based system for executing specified functions or operations, or may be implemented by a combination of dedicated hardware and computer instructions.

Related units described in the embodiments of the present disclosure may be implemented by software, or may be implemented by hardware. The name of a unit does not constitute a limitation on the unit itself in a particular case. For example, a first obtaining unit may also be described as "a unit for obtaining at least two Internet protocol addresses".

The functions described above in this specification may be at least partially performed by at least one hardware logic unit. For example, exemplary types of hardware logic components that can be used without limitations include a field programmable gate array (FPGA), an application specific integrated circuit (ASIC), an application specific standard product (ASSP), a system on chip (SOC), a complex programmable logic device (CPLD), and the like.

In the context of the present disclosure, the machine-readable medium may be a tangible medium that may contain or store a program used by or used in combination with an instruction execution system, apparatus or device. The machine-readable medium may be a machine-readable signal medium or a machine-readable storage medium. The machine-readable medium may include but be not limited to an electronic, magnetic, optical, electromagnetic, infrared, or semiconductor system, apparatus or device, or any appropriate combination thereof. Examples of the machine-readable storage medium include: an electrical connection based on at least one wire, a portable computer disk, a hard disk, a RAM, a ROM, an erasable programmable ROM (an EPROM), a flash memory, an optical fiber, a portable compact disc read-only memory (CD-ROM), an optical storage device, a magnetic storage device, or any suitable combination thereof.

## Claims

1. An image processing method, comprising:
(S110) adding an augmented reality (AR) effect model for a target object upon detecting that an object to be processed on a display interface is the target object;
(S120) determining a target display position of the AR effect model in a current video frame based on the current video frame and a previous historical video frame; and
(S130) displaying the AR effect model at the target display position to obtain a target effect video frame corresponding to the current video frame;
wherein the determining a target display position of the AR effect model in a current video frame based on the current video frame and a previous historical video frame comprises:
determining at least one historical key point from the previous historical video frame, wherein the at least one historical key point comprises N coordinate values in a three-dimensional spatial coordinate system corresponding to an AR scene, the N coordinate values are used to reflect a display position of the AR effect model in the AR scene of the previous historical video frame, N is a positive integer;
determining at least one key point to be matched in the current video frame, wherein the at least one key point to be matched comprises N coordinate values reflecting a display position of the AR effect model in an AR scene of the current video frame;
obtaining at least one key point set in combination with the at least one historical key point and the at least one key point to be matched, wherein each key point set comprises a historical key point and a corresponding key point to be matched;
determining a target transformation matrix as optical flow field information based on the historical key point and the corresponding key point to be matched in each key point set, wherein the target transformation matrix is used to reflect an association relationship between the at least one historical key point and the at least one key point to be matched, and the target transformation matrix comprises a translation matrix and a rotation matrix; and
determining the target display position of the AR effect model in the current video frame based on the optical flow field information.

2. The image processing method according to claim **1,** wherein the adding an augmented reality (AR) effect model for a target object upon detecting that an object to be processed on a display interface is the target object comprises:
invoking a preset AR effect model when it is detected that the display interface contains the object to be processed and the object to be processed is determined as the target object based on feature point data to be matched of the object to be processed; and
adding the AR effect model to the target object.

3. The image processing method according to claim 1, wherein the determining the target display position of the AR effect model in the current video frame based on the optical flow field information comprises:
determining the target display position of the AR effect model in the current video frame based on the optical flow field information and historical position information of the AR effect model in the previous historical video frame.

4. The image processing method according to claim 1, wherein the displaying the AR effect model at the target display position to obtain a target effect video frame corresponding to the current video frame comprises:
rendering the AR effect model at the target display position to maintain a relative position of the AR effect model to the target object unchanged to obtain the target effect video frame.

5. The image processing method according to claim 1, further comprising:
determining a target effect video by stitching a plurality of target effect video frames.

6. An image processing apparatus, comprising:
a target object detection module (210) configured to add an augmented reality (AR) effect model for a target object upon detecting that an object to be processed on a display interface is the target object;
a target display position determination module (220) configured to determine a target display position of the AR effect model in a current video frame based on the current video frame and a previous historical video frame; and
a display module (230) configured to display the AR effect model at the target display position to obtain a target effect video frame corresponding to the current video frame;
wherein the determining a target display position of the AR effect model in a current video frame based on the current video frame and a previous historical video frame comprises:
determining at least one historical key point from the previous historical video frame, wherein the at least one historical key point comprises N coordinate values in a three-dimensional spatial coordinate system corresponding to an AR scene, the N coordinate values are used to reflect a display position of the AR effect model in the AR scene of the previous historical video frame, N is a positive integer;
determining at least one key point to be matched in the current video frame, wherein the at least one key point to be matched comprises N coordinate values reflecting a display position of the AR effect model in an AR scene of the current video frame;
obtaining at least one key point set in combination with the at least one historical key point and the at least one key point to be matched, wherein each key point set comprises a historical key point and a corresponding key point to be matched;
determining a target transformation matrix as optical flow field information based on the historical key point and the corresponding key point to be matched in each key point set, wherein the target transformation matrix is used to reflect an association relationship between the at least one historical key point and the at least one key point to be matched, and the target transformation matrix comprises a translation matrix and a rotation matrix; and
determining the target display position of the AR effect model in the current video frame based on the optical flow field information.

7. An electronic device (300), comprising:
at least one processor (301); and
a storage unit (302,303) configured to store at least one program,
the at least one program, when executed by the at least one processor, causes the at least one processor to implement the image processing method according to any one of claims 1 to 5.

8. A storage medium comprising computer-executable instructions, wherein the computer-executable instructions are configured to, when executed by a computer processor, cause the computer processor to implement the image processing method according to any one of claims 1 to 5.

## Patentansprüche

1. Bildverarbeitungsverfahren, umfassend:
(S110) Hinzufügen eines Augmented-Reality-, (AR)-, Effektmodells für ein Zielobjekt, sobald erkannt wird, dass es sich bei einem auf einer Anzeigeschnittstelle zu verarbeitenden Objekt um das Zielobjekt handelt;
(S120) Bestimmen einer Zielanzeigeposition des AR-Effektmodells in einem aktuellen Videobild basierend auf dem aktuellen Videobild und einem vorherigen historischen Videobild; und
(S130) Anzeigen des AR-Effektmodells an der Zielanzeigeposition, um ein Zieleffektvideobild zu erhalten, das dem aktuellen Videobild entspricht;
wobei das Bestimmen einer Zielanzeigeposition des AR-Effektmodells in einem aktuellen Videobild basierend auf dem aktuellen Videobild und einem vorherigen historischen Videobild Folgendes umfasst:
Bestimmen mindestens eines historischen Schlüsselpunkts aus dem vorherigen historischen Videobild, wobei dieser mindestens eine historische Schlüsselpunkt N Koordinatenwerte in einem dreidimensionalen räumlichen Koordinatensystem umfasst, das einer AR-Szene entspricht, wobei die N Koordinatenwerte verwendet werden, um eine Anzeigeposition des AR-Effektmodells in der AR-Szene des vorherigen historischen Videobilds widerzuspiegeln, wobei N eine positive ganze Zahl ist;
Bestimmen mindestens eines abzugleichenden Schlüsselpunkts im aktuellen Videobild, wobei der mindestens eine abzugleichende Schlüsselpunkt N Koordinatenwerte umfasst, die eine Anzeigeposition des AR-Effektmodells in einer AR-Szene des aktuellen Videobilds widerspiegeln;
Bestimmen mindestens eines Schlüsselpunktsatzes in Kombination mit dem mindestens einen historischen Schlüsselpunkt und dem mindestens einen abzugleichenden Schlüsselpunkt, wobei jeder Schlüsselpunktsatz einen historischen Schlüsselpunkt und einen entsprechenden abzugleichenden Schlüsselpunkt umfasst;
Bestimmen einer Zieltransformationsmatrix als optische Flussfeldinformationen basierend auf dem historischen Schlüsselpunkt und dem entsprechenden abzugleichenden Schlüssel in jedem Schlüsselpunktsatz, wobei die Zieltransformationsmatrix verwendet wird, um eine Assoziationsbeziehung zwischen dem mindestens einen historischen Schlüsselpunkt und dem mindestens einen abzugleichenden Schlüsselpunkt widerzuspiegeln, und die Zieltransformationsmatrix eine Translationsmatrix und eine Rotationsmatrix umfasst; und
Bestimmen der Zielanzeigeposition des AR-Effektmodells im aktuellen Videobild basierend auf den optischen Flussfeldinformationen.

2. Bildverarbeitungsverfahren nach Anspruch 1, wobei das Hinzufügen eines Augmented-Reality-, (AR)-, Effektmodells für ein Zielobjekt, sobald erkannt wird, dass es sich bei einem auf einer Anzeigeschnittstelle zu verarbeitenden Objekt um das Zielobjekt handelt, Folgendes umfasst:
Aufrufen eines voreingestellten AR-Effektmodells, wenn erkannt wird, dass die Anzeigeschnittstelle das zu verarbeitende Objekt enthält, und das zu verarbeitende Objekt basierend auf abzugleichenden Merkmalspunktdaten des zu verarbeitenden Objekts als das Zielobjekt bestimmt wird; und
Hinzufügen des AR-Effektmodells zu dem Zielobjekt.

3. Bildverarbeitungsverfahren nach Anspruch 1, wobei das Bestimmen der Zielanzeigeposition des AR-Effektmodells im aktuellen Videobild basierend auf den optischen Flussfeldinformationen Folgendes umfasst:
Bestimmen der Zielanzeigeposition des AR-Effektmodells in dem aktuellen Videobild basierend auf den optischen Flussfeldinformationen und den historischen Positionsinformationen des AR-Effektmodells in dem vorherigen historischen Videobild.

4. Bildverarbeitungsverfahren nach Anspruch 1, wobei das Anzeigen des AR-Effektmodells an der Zielanzeigeposition, um ein Zieleffektvideobild zu erhalten, das dem aktuellen Videobild entspricht, Folgendes umfasst:
Rendern des AR-Effektmodells an der Zielanzeigeposition, um die relative Position des AR-Effektmodells zum Zielobjekt unverändert beizubehalten und so das Zieleffektvideobild zu erhalten.

5. Bildverarbeitungsverfahren nach Anspruch 1, weiter umfassend:
Bestimmen eines Zieleffektvideos durch Zusammenfügen mehrerer Zieleffektvideobilder.

6. Bildverarbeitungseinrichtung, umfassend:
ein Zielobjekterkennungsmodul (210), das so konfiguriert ist, dass es ein Augmented-Reality-, (AR)-, Effektmodell für ein Zielobjekt hinzufügt, sobald es erkennt, dass es sich bei einem auf einer Anzeigeschnittstelle zu verarbeitendes Objekt um das Zielobjekt handelt;
ein Zielanzeigepositionsbestimmungsmodul (220), das so konfiguriert ist, dass es eine Zielanzeigeposition des AR-Effektmodells in einem aktuellen Videobild basierend auf dem aktuellen Videobild und einem vorherigen historischen Videobild bestimmt; und
ein Anzeigemodul (230), das so konfiguriert ist, dass es das AR-Effektmodell an der Zielanzeigeposition anzeigt, um ein Zieleffektvideobild zu erhalten, das dem aktuellen Videobild entspricht;
wobei das Bestimmen einer Zielanzeigeposition des AR-Effektmodells in einem aktuellen Videobild basierend auf dem aktuellen Videobild und einem vorherigen historischen Videobild Folgendes umfasst:
Bestimmen mindestens eines historischen Schlüsselpunkts aus dem vorherigen historischen Videobild, wobei dieser mindestens eine historische Schlüsselpunkt N Koordinatenwerte in einem dreidimensionalen räumlichen Koordinatensystem umfasst, das einer AR-Szene entspricht, wobei die N Koordinatenwerte verwendet werden, um eine Anzeigeposition des AR-Effektmodells in der AR-Szene des vorherigen historischen Videobilds widerzuspiegeln, wobei N eine positive ganze Zahl ist;
Bestimmen mindestens eines abzugleichenden Schlüsselpunkts im aktuellen Videobild, wobei der mindestens eine abzugleichende Schlüsselpunkt N Koordinatenwerte umfasst, die eine Anzeigeposition des AR-Effektmodells in einer AR-Szene des aktuellen Videobilds widerspiegeln;
Bestimmen mindestens eines Schlüsselpunktsatzes in Kombination mit dem mindestens einen historischen Schlüsselpunkt und dem mindestens einen abzugleichenden Schlüsselpunkt, wobei jeder Schlüsselpunktsatz einen historischen Schlüsselpunkt und einen entsprechenden abzugleichenden Schlüsselpunkt umfasst;
Bestimmen einer Zieltransformationsmatrix als optische Flussfeldinformationen basierend auf dem historischen Schlüsselpunkt und dem entsprechenden abzugleichenden Schlüssel in jedem Schlüsselpunktsatz, wobei die Zieltransformationsmatrix verwendet wird, um eine Assoziationsbeziehung zwischen dem mindestens einen historischen Schlüsselpunkt und dem mindestens einen abzugleichenden Schlüsselpunkt widerzuspiegeln, und die Zieltransformationsmatrix eine Translationsmatrix und eine Rotationsmatrix umfasst; und
Bestimmen der Zielanzeigeposition des AR-Effektmodells im aktuellen Videobild basierend auf den optischen Flussfeldinformationen.

7. Elektronische Vorrichtung (300), umfassend:
mindestens einen Prozessor (301); und
eine Speichereinheit (302, 303), die zum Speichern mindestens eines Programms konfiguriert ist;
wobei das mindestens eine Programm, wenn es durch den mindestens einen Prozessor ausgeführt wird, den mindestens einen Prozessor dazu veranlasst, das Bildverarbeitungsverfahren nach einem der Ansprüche 1 bis 5 zu implementieren.

8. Speichermedium, das computerausführbare Anweisungen umfasst, wobei die computerausführbaren Anweisungen konfiguriert sind, um, wenn sie von einem Computerprozessor ausgeführt werden, den Computerprozessor dazu veranlassen, das Bildverarbeitungsverfahren nach einem der Ansprüche 1 bis 5 zu implementieren.

## Revendications

1. Procédé de traitement d'images, comprenant :
(S110) l'ajout d'un modèle d'effet de réalité augmentée (AR) pour un objet cible lors de la détection qu'un objet à traiter sur une interface d'affichage est l'objet cible ;
(S120) la détermination d'une position d'affichage cible du modèle d'effet d'AR dans une trame vidéo courante sur la base de la trame vidéo courante et d'une trame vidéo historique précédente ; et
(S130) l'affichage du modèle d'effet d'AR à la position d'affichage cible pour obtenir une trame vidéo d'effet cible correspondant à la trame vidéo courante ;
dans lequel la détermination d'une position d'affichage cible du modèle d'effet d'AR dans une trame vidéo courante sur la base de la vidéo courante et d'une trame vidéo historique précédente comprend :
la détermination d'au moins un point clé historique à partir de la trame vidéo historique précédente, dans lequel le au moins un point clé historique comprend N valeurs de coordonnées dans un système de coordonnées spatiales tridimensionnel correspondant à une scène d'AR, les N valeurs de coordonnées sont utilisées pour refléter une position d'affichage du modèle d'effet d'AR dans la scène d'AR de la trame vidéo historique précédente, N est un entier positif ;
la détermination d'au moins un point clé à faire concorder dans la trame vidéo courante, dans lequel le au moins un point clé à faire concorder comprend N valeurs de coordonnées reflétant une position d'affichage du modèle d'effet d'AR dans une scène d'AR de la trame vidéo courante ;
l'obtention d'au moins un ensemble de points clés en combinaison avec le au moins un point clé historique et le au moins un point clé à faire concorder, dans lequel chaque ensemble de points clés comprend un point clé historique et un point clé correspondant à faire concorder ;
la détermination d'une matrice de transformation cible sous forme d'informations de champ de flux optique sur la base du point clé historique et du point clé correspondant à faire concorder dans chaque ensemble de points clés, dans lequel la matrice de transformation cible est utilisée pour refléter une relation d'association entre le au moins un point clé historique et le au moins un point clé à faire concorder, et la matrice de transformation cible comprend une matrice de translation et une matrice de rotation ; et
la détermination de la position d'affichage cible du modèle d'effet d'AR dans la trame vidéo courante sur la base des informations de champ de flux optique.

2. Procédé de traitement d'images selon la revendication 1, dans lequel l'ajout d'un modèle d'effet de réalité augmentée (AR) pour un objet cible lors de la détection qu'un objet à traiter sur une interface d'affichage est l'objet cible comprend :
l'appel d'un modèle d'effet d'AR prédéfini lorsqu'il est détecté que l'interface d'affichage contient l'objet à traiter et que l'objet à traiter est déterminé comme étant l'objet cible sur la base de données de points caractéristiques à faire concorder de l'objet à traiter ; et
l'ajout du modèle d'effet d'AR à l'objet cible.

3. Procédé de traitement d'images selon la revendication 1, dans lequel la détermination de la position d'affichage cible du modèle d'effet d'AR dans la trame vidéo courante sur la base des informations de champ de flux optique comprend :
la détermination de la position d'affichage cible du modèle d'effet d'AR dans la trame vidéo courante sur la base des informations de champ de flux optique et d'informations de position historique du modèle d'effet d'AR dans la trame vidéo historique précédente.

4. Procédé de traitement d'images selon la revendication 1, dans lequel l'affichage du modèle d'effet d'AR à la position d'affichage cible pour obtenir une trame vidéo d'effet cible correspondant à la trame vidéo courante comprend :
le rendu du modèle d'effet d'AR à la position d'affichage cible pour maintenir inchangée une position relative du modèle d'effet d'AR par rapport à l'objet cible afin d'obtenir la trame vidéo d'effet cible.

5. Procédé de traitement d'images selon la revendication 1, comprenant en outre :
la détermination d'une vidéo d'effet cible par assemblage d'une pluralité de trames vidéo d'effet cible.

6. Appareil de traitement d'images, comprenant :
un module de détection d'objet cible (210) configuré pour ajouter un modèle d'effet de réalité augmentée (AR) pour un objet cible lors de la détection qu'un objet à traiter sur une interface d'affichage est l'objet cible ;
un module de détermination de position d'affichage cible (220) configuré pour déterminer une position d'affichage cible du modèle d'effet d'AR dans une trame vidéo courante sur la base de la trame vidéo courante et d'une trame vidéo historique précédente ; et
un module d'affichage (230) configuré pour afficher le modèle d'effet d'AR à la position d'affichage cible afin d'obtenir une trame vidéo d'effet cible correspondant à la trame vidéo courante ;
dans lequel la détermination d'une position d'affichage cible du modèle d'effet d'AR dans une trame vidéo courante sur la base de la vidéo courante et d'une trame vidéo historique précédente comprend :
la détermination d'au moins un point clé historique à partir de la trame vidéo historique précédente, dans lequel le au moins un point clé historique comprend N valeurs de coordonnées dans un système de coordonnées spatiales tridimensionnel correspondant à une scène d'AR, les N valeurs de coordonnées sont utilisées pour refléter une position d'affichage du modèle d'effet d'AR dans la scène d'AR de la trame vidéo historique précédente, N est un entier positif ;
la détermination d'au moins un point clé à faire concorder dans la trame vidéo courante, dans lequel le au moins un point clé à faire concorder comprend N valeurs de coordonnées reflétant une position d'affichage du modèle d'effet d'AR dans une scène d'AR de la trame vidéo courante ;
l'obtention d'au moins un ensemble de points clés en combinaison avec le au moins un point clé historique et le au moins un point clé à faire concorder, dans lequel chaque ensemble de points clés comprend un point clé historique et un point clé correspondant à faire concorder ;
la détermination d'une matrice de transformation cible sous forme d'informations de champ de flux optique sur la base du point clé historique et du point clé correspondant à faire concorder dans chaque ensemble de points clés, dans lequel la matrice de transformation cible est utilisée pour refléter une relation d'association entre le au moins un point clé historique et le au moins un point clé à faire concorder, et la matrice de transformation cible comprend une matrice de translation et une matrice de rotation ; et
la détermination de la position d'affichage cible du modèle d'effet d'AR dans la trame vidéo courante sur la base des informations de champ de flux optique.

7. Dispositif électronique (300), comprenant :
au moins un processeur (301) ; et
une unité de stockage (302, 303) configurée pour stocker au moins un programme,
le au moins un programme, lorsqu'il est exécuté par le au moins un processeur, amène le au moins un processeur à mettre en œuvre le procédé de traitement d'images selon l'une quelconque des revendications 1 à 5.

8. Support de stockage comprenant des instructions exécutables par ordinateur, dans lequel les instructions exécutables par ordinateur sont configurées pour, lorsqu'elles sont exécutées par un processeur informatique, amener le processeur informatique à mettre en œuvre le procédé de traitement d'images selon l'une quelconque des revendications 1 à 5.
